# EUROPÄISCHE PATENTSCHRIFT

(11) **EP 1 502 035 B1**
(45) Veröffentlichungstag und Bekanntmachung des Hinweises auf die Patenterteilung: **02.07.2008**
(21) Anmeldenummer: 03722541.4
(22) Anmeldetag: 24.04.2003
(51) Int. Cl.: F16D 65/21, H02K 21/22, H02K 5/173, H02K 1/14, H02K 1/27, H02K 1/30

(54) **BETÄTIGUNGSEINHEIT FÜR EINE ELEKTROMECHANISCH BETÄTIGBARE SCHEIBENBREMSE**
ACTUATING UNIT FOR A DISK BRAKE WHICH CAN BE ELECTROMECHANICALLY ACTUATED
UNITE D'ACTIONNEMENT POUR FREIN A DISQUE A COMMANDE ELECTROMECANIQUE

(30) Priorität: 26.04.2002 DE 10218650; 15.02.2003 DE 10306430
(43) Veröffentlichungstag der Anmeldung: 02.02.2005
(73) Patentinhaber: Continental Teves AG & Co. oHG, 60488 Frankfurt am Main (DE)
(72) Erfinder: HALASY-WIMMER, Georg, 71706 Markgröningen (DE); DRUMM, Stefan, 55291 Saulheim (DE); JUNGBECKER, Johann, 55576 Badenheim (DE); SCHMITT, Stefan, 65343 Eltville (DE); VÖLKEL, Jürgen, 60486 Frankfurt (DE)
(74) Vertreter: Dusil, Vladimir
(86) Internationale Anmeldenummer: PCT/EP2003/004278
(87) Internationale Veröffentlichungsnummer: WO 2003/091593

(56) Entgegenhaltungen:
- WO-A-01/73312
- WO-A-99/45292
- DE-A- 10 014 226
- DE-A- 10 039 466
- DE-A- 19 944 876
- DE-C- 10 050 352

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor sowie einem wirkungsmäßig zwischen dem Elektromotor und dem Betätigungselement angeordneten Untersetzungsgetriebe (Rot-Trans-Getriebe) besteht, und wobei der Rotor des Elektromotors ringförmig ausgebildet ist und das Untersetzungsgetriebe radial umgreift.

Eine derartige elektromechanische Betätigungseinheit ist z.B. aus der DE 100 50 352 C1 bekannt. Bei der vorbekannten Betätigungseinheit ist der Elektromotor als ein Transversalflussmotor ausgeführt, der die Gewindemutter eines als Untersetzungsgetriebe dienenden Kugelgewindetriebs antreibt, dessen Gewindespindel den ersten Reibbelag betätigt.

Der Rotor des Elektromotors ist mit der Gewindemutter drehfest verbunden, beispielsweise verschweißt oder formschlüssig.

Als nachteilig wird bei der vorbekannten Betätigungseinheit die Tatsache angesehen, dass bei deren Ansteuerung Störeinflüsse sowohl durch die Zuspannkraft der elektromechanischen Bremse, als auch die im Betrieb entstehenden Querkräfte und Biegemomente, über den Kugelgewindetrieb auf den Rotor übertragen werden, so dass ein gleichbleibender Luftspalt zwischen dem Stator und dem Rotor nicht gewährleistet werden kann. Dies hat jedoch eine Verschlechterung des Wirkungsgrades der vorbekannten Anordnung zur Folge. Außerdem kann der Rotor durch die Wirkung der vorhin erwähnten Kräfte bzw. Biegemomente beschädigt werden.

Eine weitere Betätigungseinheit ist aus WO 99/45292 bekannt. Diese Einheit weist zwei Untersetzungsgetriebe (einen Gewindetrieb und ein Planetengetriebe) auf, welche radial nachgiebig und biegeweich miteinander gekoppelt sind.

Es ist Aufgabe der vorliegenden Erfindung, eine elektromechanische Betätigungseinheit der eingangs genannten Gattung dahingehend zu verbessern, dass eine Entkopplung des Rotors vom Untersetzungsgetriebe erreicht wird, so dass immer die gleiche Position des Rotors gegenüber dem Stator gewährleistet werden kann.

Diese Aufgabe wird erfindungsgemäß mit den Merkmalen des Kennzeichnenden Teils des Anspruchs 1 gelöst. Durch diese Maßnahme wird eine Entkopplung des Rotors vom Untersetzungsgetriebe konstruktiv ermöglicht, so dass eine Verformung des Rotors wirksam verhindert wird und zwischen dem Rotor und dem Stator gleichbleibende Abstände eingehalten werden können.

Zur Konkretisierung des Erfindungsgedankens ist vorgesehen, dass der Elektromotor sowie das Untersetzungsgetriebe als modulare Baugruppen ausgebildet sind, die getrennt und unabhängig voneinander prüfbar sind. Eine derart aufgebaute elektromechanische Betätigungseinheit zeichnet sich durch einen hohen Wirkungsgrad, eine hervorragende Dynamik der Bremsbetätigung sowie eine extrem kompakte Bauweise aus, bei der hohe, massenbezogene Bremsmomente übertragen werden können.

Vorteilhafte Weiterbildungen des Erfindungsgegenstandes sind in den Unteransprüchen 3 bis 15 aufgeführt.

Die Erfindung wird in der nachfolgenden Beschreibung eines Ausführungsbeispiels unter Bezugnahme auf die beiliegende Zeichnung näher erläutert.

In der Zeichnung zeigen:
- Fig. 1: einen Axialschnitt einer Ausführung der erfindungsgemäßen, elektromechanischen Betätigungseinheit mit einem Transversalflussmotor in Außenläuferbauform;
- Fig. 2: den modularen Aufbau der erfindungsgemäßen elektromechanischen Betätigungseinheit in einer der Fig. 1 entsprechenden Darstellung;
- Fig. 3: den ebenfalls modularen Aufbau des als Antriebseinheit dienenden Transversalflussmotors,

- Fig. 4: eine Explosionszeichnung, die die konstruktiven Einzelheiten des Transversalflussmotors darstellt, und
- Fig. 5: den Aufbau des Rotors des Transversalflussmotors gemäß Fig. 3 und 4.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, dass sie der linken und der rechten Seitenfläche einer Bremsscheibe 6 zugewandt sind, die mit einem nicht dargestellten Fahrzeugrad drehfest verbunden ist.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt, so dass auf die Bremsscheibe 6 eine Bremskraft ausgeübt wird.

Die erfindungsgemäße Betätigungseinheit, die mittels nicht gezeigter Befestigungsmittel am Bremssattel angebracht ist, weist einen modularen Aufbau auf und besteht im wesentlichen aus zwei trennbaren, unabhängig voneinander prüfbaren Baugruppen bzw. Modulen, und zwar aus einer Antriebseinheit 1 sowie einem den ersten Reibbelag 4 betätigenden Untersetzungsgetriebe 2.

Die vorhin erwähnte Antriebseinheit 1 besteht aus einem Elektromotor 11, der im dargestellten Beispiel als ein sog. Transversalflussmotor ausgebildet ist, dessen Stator 9 unbeweglich in einem Motorgehäuse 12 angeordnet ist und dessen Rotor 10 den Stator 9 radial umgreift. Zwischen dem Transversalflussmotor 11 und dem vorhin erwähnten Betätigungselement 7 ist wirkungsmäßig das Untersetzungsgetriebe 2 angeordnet, das im gezeigten Beispiel als ein Kugelgewindetrieb 16 bis 18 ausgebildet ist, das in einem Getriebegehäuse 19 gelagert ist. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Das Getriebegehäuse 19 kann auch einteilig mit dem vorhin erwähnten Bremssattel ausgeführt sein.

Die Anordnung ist dabei derart getroffen, dass der Rotor 10 des Transversalflussmotors 11 die Gewindespindel 17 des Kugelgewindetriebs 16 - 18 mittels zweier Kraftübertragungsteile 13, 14 antreibt, während die Gewindemutter 16 sich am ersten Reibbelag 4 abstützt und somit das vorhin erwähnte Betätigungselement 7 bildet. Der Lagerung des Rotors 10 dienen zwei Radiallager 8, 15, die im Motorgehäuse 12 angeordnet sind. Außerdem ist ein topfförmiges, den Kugelgewindetrieb 16 - 18 radial umgreifendes Führungsteil 20 vorgesehen, das sich am Getriebegehäuse 19 axial abstützt und in dem die Gewindemutter 16 gelagert ist.

Die Lagerung der Gewindemutter 16 im Führungsteil 20 erfolgt sowohl in ihrem dem ersten Reibbelag 4 zugewandten Bereich mittels eines im Führungsteil 20 angeordneten ersten Gleitringes 25 als auch in ihrem dem Reibbelag 4 abgewandten Endbereich mittels eines auf der Gewindemutter 16 angeordneten zweiten Gleitringes 26. Die vorhin erwähnte, vom Transversalflussmotor 11 angetriebene Gewindespindel 17 ist im dargestellten Beispiel dreiteilig ausgebildet und besteht aus einem mit der Gewindemutter 16 mittels der Kugeln 18 im Eingriff stehenden, rohrförmigen ersten Spindelteil 27, einem sich an einem innerhalb des Führungsteils 20 angeordneten Axiallager 30 abstützenden, ringförmigen zweiten Spindelteil bzw. einem radialen Bund 28 sowie dem vorhin genannten Kraftübertragungsteil 14, das mittels einer formschlüssigen Steckverbindung mit dem an den Rotor 10 angekoppelten Kraftübertragungsteil 13 verbunden ist. Zu diesem Zweck ist das Ende des Kraftübertragungsteils 14 beispielsweise als ein kardanähnliches Gelenk ausgebildet, der in eine entsprechend geformte Öffnung im Kraftübertragungsteil 13 hineingeschoben wird. Dabei ist es besonders vorteilhaft, wenn die formschlüssige Steckverbindung torsionssteif und radial nachgiebig an den Rotor 10 angekoppelt ist. Um schließlich das Untersetzungsgetriebe 2 vor Verunreinigungen, wie z. B. Spritzwasser, zu schützen, ist zwischen zwischen der Gewindemutter 16 und dem Führungsteil 20 eine elastische Dichtung 31 vorgesehen, die im gezeigten Beispiel als eine Dichtmanschette ausgebildet ist.

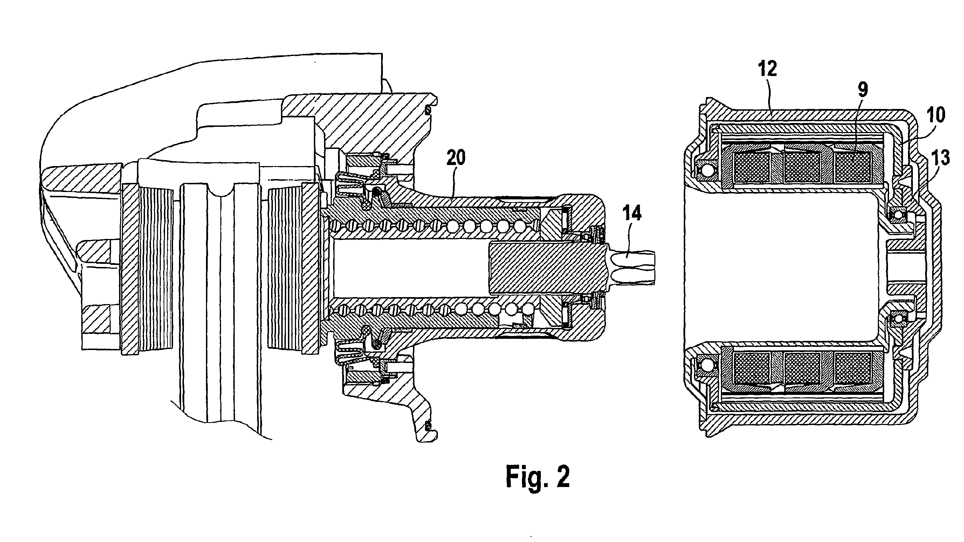

Die modulare Bauweise der erfindungsgemäßen Betätigungseinheit ist Fig. 2 zu entnehmen. Es ist eindeutig erkennbar, dass die Antriebseinheit 1 bei der axialen Montage mit dem Kraftübertragungsteil 14 des Untersetzungsgetriebes 2 rotatorisch gekoppelt wird.

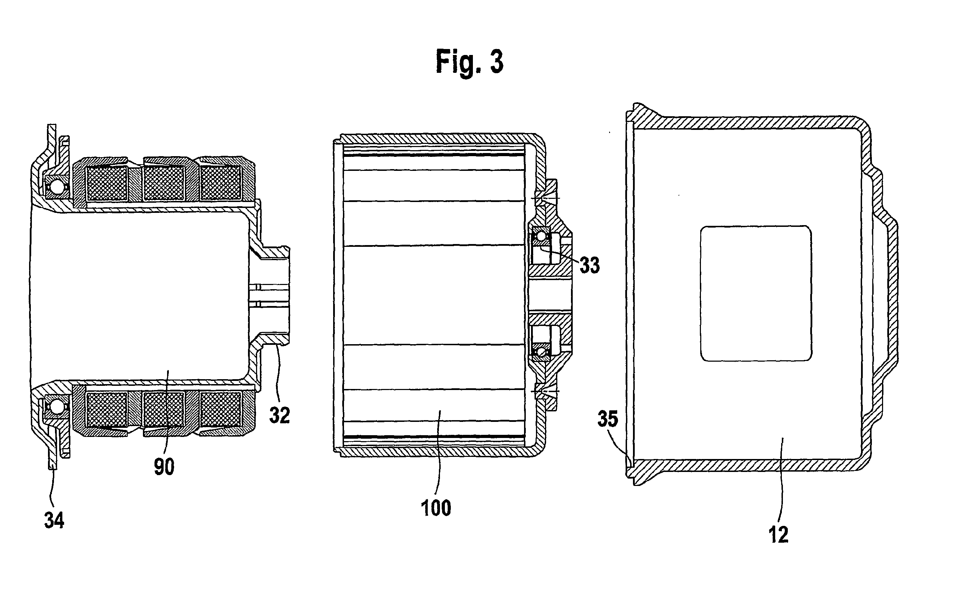

Der ebenfalls modulare Aufbau des Transversalflussmotors 11 ist im wesentlichen Fig. 3 zu entnehmen. In der Darstellung sind ein Statormodul 90, ein Rotormodul 100 sowie das vorhin erwähnte Motorgehäuse 12 erkennbar. Die Montage des Transversalflussmotors 11 erfolgt axial mittels Press- und Schnappverbindungen 32, 33, 34, 35.

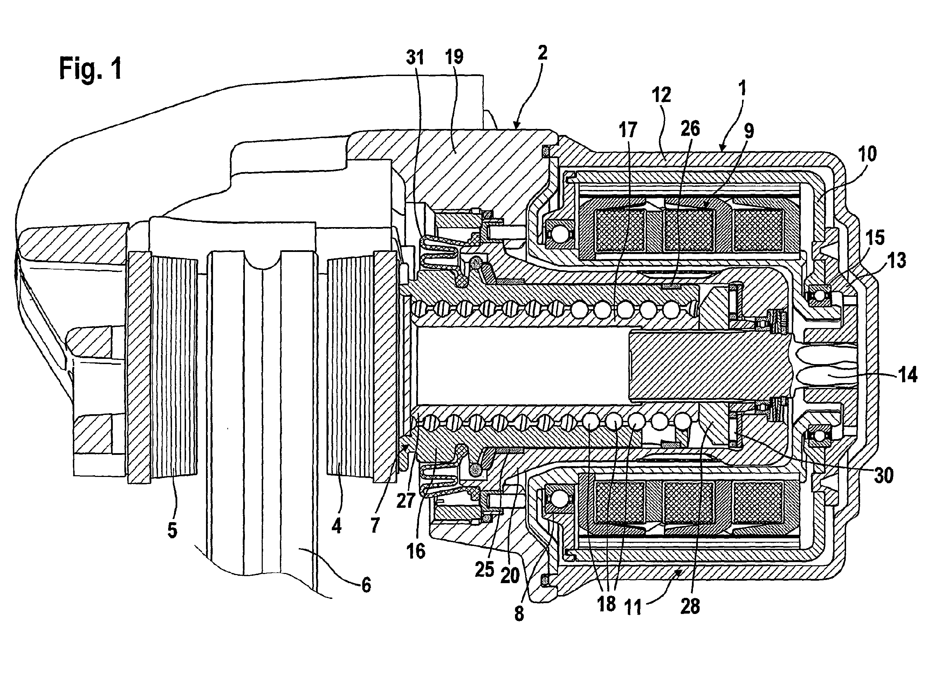

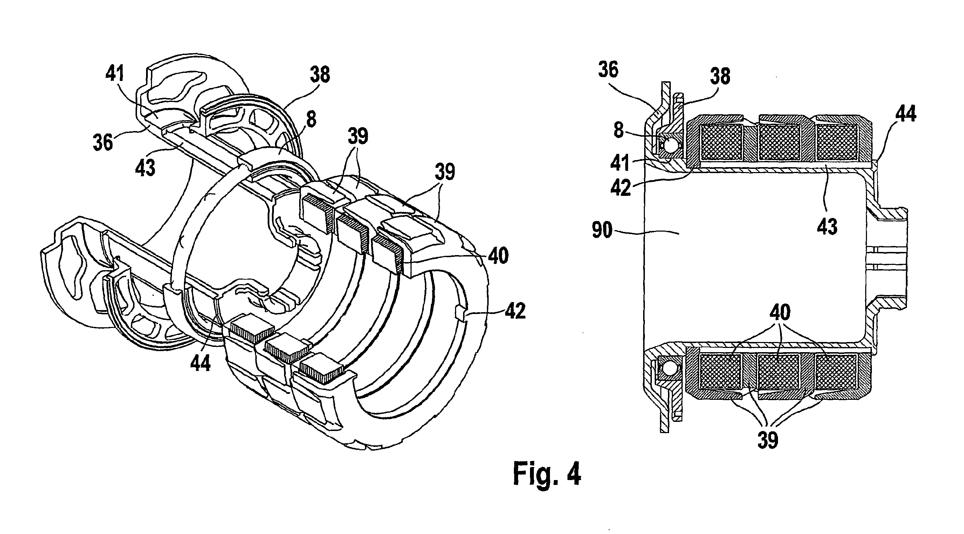

Aus der Explosionsdarstellung gemäß Fig. 4 erhellt, dass das Statormodul 90 im wesentlichen aus einem Statorträger 36, dem im Zusammenhang mit Fig. 1 erwähnten Rotorlager 8 mit einem Lagerschild 38, symmetrisch aufgebauten Jochsegmentringen 39 sowie drei kreisförmigen Erregerwicklungen 40 besteht. Der Statorträger 36 erfüllt mehrere Funktionen und dient als Aufnahme des Rotorlagers 8 bzw. des Lagerschilds 38, als Arretierungsmittel der Jochsegmentringe 39 sowie als Eisenrückschluss der Erregerwicklungen 40. Das Rotorlager 8 wird dabei vorzugsweise mit dem Lagerring 38 vormontiert auf einen Lagerbund 41 des Statorträgers 36 aufgepresst. Die einzelnen Jochsegmentringe 39 werden mit den Erregerwicklungen 40 axial und rotatorisch arretiert auf den Statorträger 36 aufgeschoben. Die axiale Sicherung des auf diese Art entstandenen Statorpakets erfolgt durch axiale Umbördelung eines am Statorträger 36 ausgebildeten Bördelbundes 44, wobei das Statorpaket vor der Endmontage durch Klebetechnik oder gemeinsames Vergiessen der Jochsegmentringe 39 und der Erregerwicklungen 40 gebildet werden kann. Der Phasenversatz und die Verdrehsicherung der Jochsegmentringe 39 wird durch daran angebrachte Arretiervorsprünge 42 sowie im Statorträger 36 ausgebildete Nuten 43 sichergestellt. Alle Jochsegmentringe 39 sind identische Bauteile, die durch Sintern oder Kaltformverfahren kostengünstig hergestellt werden. Die Kontaktierung der Erregerwicklungen 40 kann vorzugsweise mittels am Statorträger 36 aufgebrachter Leiterbahnen erfolgen.

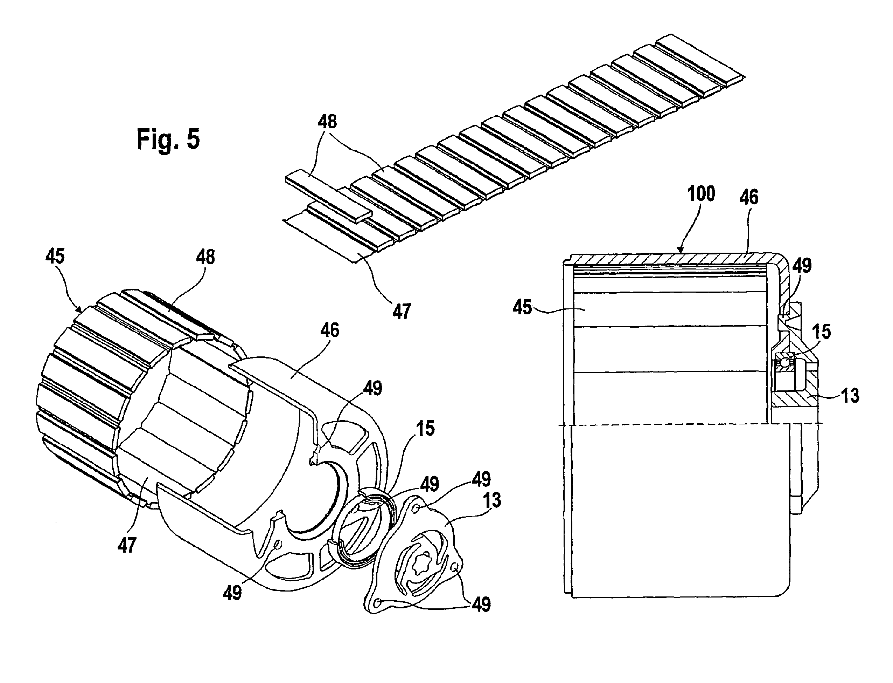

Fig. 5 lässt den Aufbau des im Zusammenhang mit Fig. 3 erwähnten Rotormoduls 100 erkennen, das im wesentlichen aus einem Magnetring 45, einem Rotorring 46, dem im Zusammenhang mit Fig. 1 erwähnten Rotorlager 15 sowie dem ebenfalls im Zusammenhang mit Fig. 1 erwähnten torsionssteifen und biegeweichen Kraftübertragungsteil 13 besteht. Der Magnetring 45 besteht seinerseits aus einem endlos kaltverformten, nicht magnetisierbaren Magnetträgerband 47 sowie mehreren, darauf aufgeklebten Permanentmagneten 48. Beim Zusammenbau des Rotormoduls 100 wird das Magnetträgerband 47 entsprechend dem Innendurchmesser des Rotorringes 46 abgelängt, durch ein geeignetes Montagewerkzeug in Form eines Ringes axial in den Rotorring 46 eingeführt und mit ihm verklebt. Dabei werden die Permanentmagneten 48 durch die radiale Federvorspannung des Magnetringes 45 an den Rotorring 46 angepresst. Das Magnetträgerband 47 übernimmt gleichzeitig die Funktion einer Bandagierung der Permanentmagneten 48. Anschließend wird das Rotorlager 15 in den Rotorring 46 eingepresst und mittels schematisch angedeuteter Verstemmungen 49 des ersten Kraftübertragungsteiles 13 mit dem Rotorring 46 axial verriegelt.

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (7) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit aus einem Elektromotor (11), einem wirkungsmäßig zwischen dem Elektromotor (11) und dem Betätigungselement (7) angeordneten Untersetzungsgetriebe (2) besteht, das als Kugelgewindetrieb (16-18) ausgebildet ist dessen Gewindemutter (16) mit dem ersten Reibbelag (4) kraftübertragend zusammen wirkt, und wobei der Rotor (10) des Elektromotors (11) ringförmig als Rotorring (46) ausgebildet ist, das Untersetzungsgetriebe (2) radial umgreift und an beiden Enden drehbar gelagert ist, wobei zwischen dem Rotor (10) und dem Untersetzungsgetriebe (2) eine torsionssteife und radial nachgiebige Verbindung vorgesehen ist, die ein torsionssteifes und radial nachgiebiges erstes Kraftübertragungsteil (13) aufweist, **dadurch gekennzeichnet, dass** das erste Kraftübertragungsteil (13) einerseits mit dem Rotorring (46) gekoppelt ist und andererseits mit dem Ende eines zweiten Kraftübertragungsteils(14) ein kardanähnliches Gelenk bildet und die Gewindespindel (17) des Kugelgewindetriebs an den Rotor (10) koppelt.

2. Betätigungseinheit nach Anspruch 1 **dadurch gekennzeichnet, dass** der Elektromotor (11) sowie das Untersetzungsgetriebe (2) als modulare Baugruppen ausgebildet sind, die getrennt und unabhängig voneinander prüfbar sind.

3. Betätigungseinheit nach einem der vorhergehenden Ansprüche **dadurch gekennzeichnet, dass** ein die Gewindemutter (16) radial umgreifendes Führungsteil (20) vorgesehen ist, das sich an dem den Kugelgewindetrieb (16-18) aufnehmenden ringförmigen Getriebegehäuse (19) abstützt und an dem sich die Gewindespindel (17 bzw. 28) ihrerseits axial abstützt.

4. Betätigungseinheit nach Anspruch 3, **dadurch gekennzeichnet, dass** die axiale Abstützung der Gewindespindel (17) unter Zwischenschaltung eines Axiallagers (30) mittels eines radialen Bundes (28) erfolgt.

5. Betätigungseinheit nach einem der vorhergehenden Ansprüche **dadurch gekennzeichnet, dass** zwischen der Gewindemutter (16) und dem Führungsteil (20) eine elastische Dichtung (31) vorgesehen ist.

6. Betätigungseinheit nach einem der vorhergehenden Ansprüche **dadurch gekennzeichnet, dass** die Gewindespindel (16 bzw.27,28,14) mehrteilig ausgeführt ist.

7. Betätigungseinheit nach einem der vorhergehenden Ansprüche, **dadurch gekennzeichnet, dass** der Elektromotor (11) ein Transversalflussmotor (11) ist, der modular aufgebaut ist und aus einem Statormodul (90), einem Rotormodul (100) sowie einem Motorgehäuse (12) besteht.

8. Betätigungseinheit nach Anspruch 7, **dadurch gekennzeichnet, dass** das Statormodul (90), das Rotormodul (100) sowie das Motorgehäuse (12) im zusammengebauten Zustand mittels Press- und Schnappverbindungen (32 - 35) zusammen gehalten werden.

9. Betätigungseinheit nach Anspruche 7 oder 8, **dadurch gekennzeichnet, dass** das Statormodul (90) aus einem Statorträger (36), einem Rotorlager (8) zur Lagerung des Rotors (10), mehreren, auf dem Statorträger (36) angeordneten Jochsegmentringen (39) sowie mehreren Erregerwicklungen (40) besteht.

10. Betätigungseinheit nach Anspruch 9, **dadurch gekennzeichnet, dass** der Statorträger (36) das Rotorlager (8) aufnimmt.

11. Betätigungseinheit nach Anspruch 9 oder 10, **dadurch gekennzeichnet, dass** der Statorträger (36) als Arretierungsmittel für die Jochsegmentringe (39) dient.

12. Betätigungseinheit nach Anspruch 9, 10, oder 11 **dadurch gekennzeichnet, dass** der Statorträger (36) als Eisenrückschluss für die Erregerwicklungen (40) dient.

13. Betätigungseinheit nach einem der Ansprüche 7 bis 12, **dadurch gekennzeichnet, dass** Rotormodul (90) aus einem Magnetring (45), einem Rotorring (46), einem zweiten Rotorlager (15) zur Lagerung des Rotors (10), sowie dem ersten Kraftübertragungsteil (13) besteht.

14. Betätigungseinheit nach Anspruch 13, **dadurch gekennzeichnet, dass** der Magnetring (45) aus einem endlos kaltverformten, nicht magnetisierbaren Magnetträgerband (47) sowie mehreren, darauf aufgeklebten Permanentmagneten (48) besteht.

15. Betätigungseinheit nach Anspruch 13 oder 14 **dadurch gekennzeichnet, dass** das zweite Rotorlager (15) in den Rotorring (46) eingepresst ist und mittels Verstemmungen (49) des Kraftübertragungsteiles (13) im Rotorring (46) axial gesichert ist.

## Claims

1. Actuating unit for an electromechanically operable disc brake for motor vehicles, which is arranged on a brake caliper in which two friction linings (4, 5) are arranged so as to be displaceable within limits, each friction lining cooperating with each one lateral surface of a brake disc (6), with one (4) of the friction linings (4, 5) being directly movable into engagement with the brake disc (6) by the actuating unit by means of an actuating element (7), while the other friction lining (5) is movable into engagement with the brake disc (6) by the effect of a reaction force generated by the brake caliper, in which case the actuating unit consists of an electric motor (11), a reduction gear (2) interposed between the electric motor (11) and the actuating element (8) in terms of effect, said reduction gear being configured as a ball screw (16 to 18) whose threaded nut (16) cooperates with the first friction lining (4) in a force-transmitting manner, and in which case the rotor (10) of the electric motor (11) is designed annularly as a rotor ring (46), embraces the reduction gear (2) radially and is pivoted at both ends, in which case a torsion-proof and radially yielding connection is provided between the rotor (10) and the reduction gear (2) which includes a torsion-proof and radially yielding first transmission part (13),
**characterized in that** the first force transmission part (13) is coupled with the rotor ring (46), on the one hand, and forms a cardan-like joint with the end of a second force transmission part (14), on the other hand, and couples the threaded spindle (17) of the ball screw with the rotor (10).

2. Actuating unit as claimed in claim 1,
**characterized in that** the electric motor (11) and the reduction gear (2) are designed as modular subassemblies which can be tested separately and independently of each other.

3. Actuating unit as claimed in any one of the preceding claims,
**characterized in that** a guiding portion (20) is provided which radially embraces the threaded nut (16), which is supported on the annular gear casing (19) that accommodates the ball screw (16 to 18) and on which the threaded spindle (17 or 28), in turn, is axially supported.

4. Actuating unit as claimed in claim 3,
**characterized in that** the axial support of the threaded spindle (17) is provided by means of a radial bead (28) by the intermediary of an axial bearing (30).

5. Actuating unit as claimed in any one of the preceding claims,
**characterized in that** an elastic seal (31) is provided between the threaded nut (16) and the guiding portion (20).

6. Actuating unit as claimed in any one of the preceding claims,
**characterized in that** the threaded spindle 16 or 27, 28, 14) has a multi-part design.

7. Actuating unit as claimed in any one of the preceding claims,
**characterized in that** the electric motor (11) is a motor with transverse flux (11) which has a modular design and consists of a stator module (90), a rotor module (100) as well as a motor casing (12).

8. Actuating unit as claimed in claim 7,
**characterized in that** the stator module (90), the rotor module (100) and the motor casing (12), in the assembled condition, are held together by means of press-fit and snap connections (32 to 35).

9. Actuating unit as claimed in claim 7 or 8,
**characterized in that** the stator module (90) consists of a stator carrier (36), a rotor bearing (8) for the mounting support of the rotor (10), several yoke segment rings (39) arranged on the stator carrier (36) and several exciter windings (40).

10. Actuating unit as claimed in claim 9,
**characterized in that** the stator carrier (36) accommodates the rotor bearing (8).

11. Actuating unit as claimed in claim 9 or 10,
**characterized in that** the stator carrier (36) serves as a locking means for the yoke segment rings (39).

12. Actuating unit as claimed in claim 9, 10 or 11,
**characterized in that** the stator carrier (36) is used as an outside iron core for the exciter windings (40).

13. Actuating unit as claimed in any one of claims 7 to 12,
**characterized in that** the rotor module (90) consists of a magnet location ring (45), a rotor ring (46), a second rotor bearing (15) for the mounting support of the rotor (10), as well as the first force transmission part (13).

14. Actuating unit as claimed in claim 13,
**characterized in that** the magnet location ring (45) consists of a continuously cold-worked, non-magnetizable magnet carrier tape (47) as well as several permanent magnets (48) cemented thereto.

15. Actuating unit as claimed in claim 13 or 14,
**characterized in that** the second rotor bearing (15) is press-fitted into the rotor ring (46) and is axially secured in the rotor ring (46) by means of calked portions (49) of the force transmission part (13).

## Revendications

1. Unité d'actionnement pour un frein à disques à actionnement électromagnétique pour véhicule automobile, qui est disposée sur un étrier de frein dans lequel sont disposées deux garnitures de friction (4, 5), pouvant coulisser de manière limitée et coopérant chacune avec une surface latérale d'un disque de frein (6), l'une (4) des garnitures de friction (4, 5) pouvant être amenée en prise avec le disque de frein (6), au moyen d'un élément d'actionnement (7), directement par l'unité d'actionnement et l'autre garniture de frein (5) par l'action d'une force de réaction appliquée par l'étrier de frein, l'unité d'actionnement étant constituée d'un moteur électrique (11), d'un démultiplicateur (2) disposé de manière active entre le moteur électrique (11) et l'élément d'actionnement (7), lequel démultiplicateur est réalisé sous la forme d'un mécanisme à vis à billes (16-18) dont l'écrou taraudé (16) coopère avec la première garniture de friction (4) de manière à transmettre la force, et le rotor (10) du moteur électrique (11) étant réalisé en tant que bague de rotor (46) de forme annulaire qui entoure radialement le démultiplicateur (2) et est supporté tournant aux deux extrémités, une liaison rigide en torsion et souple radialement étant prévue entre le rotor (10) et le démultiplicateur (2), qui comporte un premier élément de transmission de force (13) rigide en torsion et radialement souple, **caractérisée en ce que** le premier élément de transmission de force (13) est couplé d'une part à la bague de rotor (46) et forme, d'autre part, avec l'extrémité d'un second élément de transmission de force (14), une articulation de type cardan et couple la broche filetée (17) du mécanisme à vis à billes au rotor (10).

2. Unité d'actionnement selon la revendication 1, **caractérisée en ce que** le moteur électrique (11) ainsi que le démultiplicateur (2) sont réalisés sous la forme d'ensembles modulaires qui peuvent être contrôlés séparément et indépendamment l'un de l'autre.

3. Unité d'actionnement selon l'une quelconque des revendications 1 ou 2, **caractérisée en ce qu'**il est prévu un élément de guidage (20) entourant radialement l'écrou taraudé (16), lequel prend appui contre le boîtier de transmission (19) de forme annulaire recevant le mécanisme à vis à billes (16-18), et contre lequel prend appui axialement de son côté la broche filetée (17, respectivement 28).

4. Unité d'actionnement selon la revendication 3, **caractérisée en ce que** l'appui axial de la broche filetée (17) s'effectue avec interposition d'un palier axial (30) au moyen d'un épaulement radial (28).

5. Unité d'actionnement selon l'une quelconque des revendications 1 à 4, **caractérisée en ce qu'**il est prévu une garniture d'étanchéité élastique (31) entre l'écrou taraudé (16) et l'élément de guidage (20).

6. Unité d'actionnement selon l'une quelconque des revendications 1 à 5, **caractérisée en ce que** la broche filetée (16, respectivement 27, 28, 14) est réalisée en plusieurs parties.

7. Unité d'actionnement selon l'une quelconque des revendications 1 à 6, **caractérisée en ce que** le moteur électrique (11) est un moteur à flux transversal (11) qui est de construction modulaire et est constitué d'un module de stator (90), d'un module de rotor (100) ainsi que d'un carter de moteur (12).

8. Unité d'actionnement selon la revendication 7, **caractérisée en ce que** le module de stator (90), le module de rotor (100) ainsi que le carter de moteur (12) sont maintenus ensemble à l'état assemblé par des liaisons serties et des liaisons clipsées (32-35).

9. Unité d'actionnement selon l'une quelconque des revendications 7 ou 8, **caractérisée en ce que** le module de stator (90) est constitué d'un porte-stator (36), d'un palier de rotor (8) pour supporter le rotor (10), de plusieurs anneaux segmentés de culasse (39) ainsi que de plusieurs enroulements d'excitation (40).

10. Unité d'actionnement selon la revendication 9, **caractérisée en ce que** le porte-stator (36) reçoit le palier de rotor (8).

11. Unité d'actionnement selon la revendication 9 ou 10, **caractérisée en ce que** le porte-stator (36) sert de moyen de blocage pour les anneaux segmentés de culasse (39).

12. Unité d'actionnement selon les revendications 9, 10 ou 11, **caractérisée en ce que** le porte-stator (36) sert de fermeture en fer pour les enroulements d'excitation (40).

13. Unité d'actionnement selon l'une quelconque des revendications 7 à 12, **caractérisée en ce que** le module de rotor (90) est constitué d'une bague magnétique (45), d'une bague de rotor (46), d'un second palier de rotor (15) pour supporter le rotor (10), ainsi que du premier élément de transmission de force (13).

14. Unité d'actionnement selon la revendication 13, **caractérisée en ce que** la bague magnétique (45) est constituée d'une bande de support d'aimant (47) non magnétisable, déformée à froid sans fin, ainsi que de plusieurs aimants permanents (48) collés sur celle-ci.

15. Unité d'actionnement selon l'une quelconque des revendications 13 ou 14, **caractérisée en ce que** le second palier de rotor (15) est enfoncé dans la bague de rotor (46) et est bloqué axialement par matage (49) de l'élément de transmission de force (13) dans la bague de rotor (46).
